Europäisches Patentamt

European Patent Office

Office européen des brevets

(11) Veröffentlichungsnummer : **0 010 796**
**B1**

(12) **EUROPÄISCHE PATENTSCHRIFT**

(45) Veröffentlichungstag der Patentschrift :
05.10.83

(21) Anmeldenummer : **79200575.3**

(22) Anmeldetag : **09.10.79**

(51) Int. Cl.³ : **G 02 F   1/133**

(54) **Eine aus einer elektrooptischen Flüssigkeitszelle bestehende Anzeigeanordnung.**

(30) Priorität : **21.10.78 DE 2845858**

(43) Veröffentlichungstag der Anmeldung :
**14.05.80 Patentblatt 80/10**

(45) Bekanntmachung des Hinweises auf die Patenterteilung : **05.10.83 Patentblatt 83/40**

(84) Benannte Vertragsstaaten :
**BE CH FR IT NL**

(56) Entgegenhaltungen :
CH A 601 823
DE A 2 237 084
FR A 2 270 625
US A 3 811 751
US A 3 838 909
US A 3 971 869

ELECTRICAL DESIGN NEWS, vol. 17, Nr. 13, 01-07-72, Seiten 15-16 Denver US « Loured film sharpers image on low-light-level displays »

(73) Patentinhaber : **International Standard Electric Corporation**
**320 Park Avenue**
**New York New York 10022 (US)**

(72) Erfinder : **Tischer, Manfred**
**Kiesweg 1**
**D-7441 Unterensingen (DE)**
Erfinder : **Voigt, Klaus-Peter**
**Königsberger Strasse 10**
**D-7300 Esslingen (DE)**

(74) Vertreter : **Graf, Georg H., Dipl.-Ing. et al**
**c/o Standard Elektrik Lorenz AG Patent- und Lizenzwesen Postfach 300 929 Kurze Strasse 8**
**D-7000 Stuttgart 30 (DE)**

Eine aus einer elektrooptischen Flüssigkeitszelle bestehende Anzeigeanordnung

Die Erfindung betrifft eine Anzeigeanordnung, bestehend aus einer Flüssigkeitszelle, bei der die lichtstreuung einer zwischen durchsichtigen Elektroden liegenden Flüssigkeitsschicht durch Anlegen einer Spannung schaltbar ist, bei der hinter der rückseitigen Deckplatte der Flüssigkeitszelle eine Lichtquelle und zwischen Lichtquelleiund Flüssigkeitszelle ein Blendenelement vorgesehen ist, welches in Beobachtungsrichtung den direkten Lichtdurchtritt zum die Flüssigkeitszelle von der Vorderseite betrachtenden Beobachter verhindert.

Für Anzeigenanordnungen, die ohne mechanisch bewegliche Teile elektrisch geschaltet werden und die es gestatten, auch komplexere Figuren, wie alphanumerische Zeichen, bei flachen Abmessungen und bei geringem Leistungsbedarf unter normalen Umweltbedingungen darzustellen, entsteht mit der Zunahme der Elektronik in vielen Lebensbereichen ein steigender Bedarf.

Bekannt ist aus der DE-B-20 42 180 eine Anzeigeanordnung der eingangs genannten Art, mit der unter geeigneten Umweltlichtverhältnissen und geeignetem Betrachtungswinkel brauchbare Ergebnisse erzielt werden.

Nachteilig ist, daß an den Medienübergängen Reflexionen des beleuchtenden Lichtes auftreten können, welche kontrastmindernd wirken.

Als günstig hat es sich deshalb erwiesen, die Vorderseite der Flüssigkeitszelle am Übergang · auf Luft im Brechungsindex anzupassen.

Vorteilhaft ist auch eine Brechungsindexanpassung zwischen der Flüssigkeitszelle und dem Blendenelement, da sich durch Lichtreflexionen an diesem Spalt neben der Schwächung des Kontrastes störende Schattenbilder der Anzeigeelemente ausbilden.

Als besonders geeignetes Mittel zur Anpassung dieses Spaltes haben sich beispielsweise die in der Optik an sich bekannten Immersionsflüssigkeiten oder optische Klebstoffe erwiesen.

Besonders einfach herzustellen ist die Anzeigeanordnung, wenn das Blendenelement mit dem optischen Klebstoff als Selbstklebefolie ausgebildet ist, was sich noch dahingehend verbessern läßt, daß diese Selbstklebefolie auf der zur Lichtquelle gewandten Seite diffus streuend gestaltet ist.

Verbleibende Restreflexionen an diesem Spalt zwischen Flüssigkeitszelle und Blendenelement können durch Anordnen eines Graufilters zwischen der Flüssigkeit der Flüssigkeitszelle und dem Blendenelement vermindert werden.

Günstige Ausgestaltungen dieses Graufilters sehen vor, daß dieses direkt auf die Rückwand der Flüssigkeitszelle oder auf das Blendenelement aufgebracht oder die Rückwand der Zelle selbst als Graufilter ausgeführt wird. Es ist jedoch aufwendig, mehrere Medienübergänge vollständig reflexionsfrei anzupassen.

Aufgabe der Erfindung ist es, eine Anzeigeanordnung der eingangs genannten Art anzugeben, die unter allen normalen Umweltlichtverhältnissen, beispielsweise auch bei Sonneneinstrahlung und/oder unter einem weiten Betrachtungswinkel eine gut lesbare Anzeige ohne störende Schattenbilder ergeben.

Gelöst wird diese Aufgabe gemäß dem Kennzeichen des Anspruches. Zur Verminderung von Reflexionen wird die Anzahl der Medienübergänge verkleinert.

Es erfolgt eine nahezu vollständige Vermeidung von Reflexionen, wenn man erfindungsgemäß das Blendelement im angrenzenden Deckglas der Flüssigkeitszelle anordnet, so daß das Licht von der Rückseite des Blendenelementes ohne Grenzflächen bis zur Flüssigkeit gelangt.

Die Erfindung soll nun an einem Ausführungsbeispiel näher erläutert werden. Es zeigen :

Figur 1 den schematischen Aufbau einer Anzeigeanordnung nach dem Stand der Technik und

Figur 2 eine erfindungsgemäße Anzeigeanordnung mit integrierter Deckplatte.

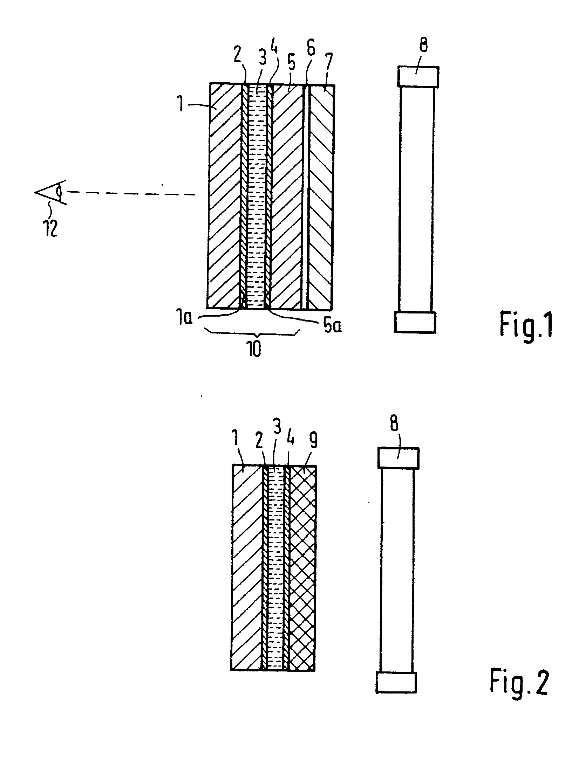

Die in Fig. 1 gezeigte schematisierte Anordnung nach dem Stand der Technik besteht aus einer Flüssigkeitszelle 10, einem Blendenelement 7 und einer Lichtquelle 8. Zwischen der Flüssigkeitszelle 10 und dem Blendenelement 7 befindet sich ein Spalt 6. Die Flüssigkeitszelle 10 besteht aus den beiden Deckgläsern 1 und 5, die auf ihren gegenüberliegenden Seiten 1a und 5a jeweils transparente Elektroden 2 und 4 tragen, zwischen denen sich eine Flüssigkeit 3 befindet, die bei Anlegen einer Spannung zwischen die Elektroden 2 und 4 ihre Lichtdurchlässigkeit verändert. Die Elektroden 2 und 4 sind im allgemeinen in der gewünschten Form des darzustellenden Zeichens unterteilt, was hier nicht im einzelnen gezeigt ist.

Das Blendenelement 7 besteht beispielsweise aus vielen parallelen Lamellen, die in eine durchsichtige Folie eingebettet sind, wie beispielsweise « Jalousienfolien »® der Firma « 3M Company », und Läßt Licht nur in begrenzten Winkelbereichen hindurch. Wird die Durchlassrichtung des Blendenelements 7 beispielsweise mit etwa 45 Grad zur Fläche des Blendenelementes gewählt, so kann ein Betrachter 12, der senkrecht durch die Flüssigkeitszelle 10 das Blendenelement 7 betrachtet, nicht direkt in die Lichtquelle 8 sehen, sondern sieht bei geschwärzten Lamellen des Blendenelementes 7 und bei transparenter Flüssigkeit einen schwarzen Hintergrund. Werden nun Teile der Elektroden 2 und 4 so mit Spannung versorgt, daß die Transparenz der zwischen diesen Teilen befindlichen Flüssigkeit 3 sich verringert und Lichtstreuung eintritt, so erscheinen diese Bereiche für den Betrachter als helle Stellen auf dunklem Hintergrund.

Durch Lichtreflexionen an der dem Betrachter 12 zugewandten Vorderseite und am Spalt 6 der Anzeigeanordnung wird der erzielbare Kontrast begrenzt.

Das Deckglas 5 aus Fig. 1 kann als Graufilter ausgebildet sein, damit die durch Unvollkommenheiten der Indexanpassung am Spalt 6 auftretende Reflexionsstrahlung verringert wird.

Fig. 2 zeigt eine Anordnung gemäß der Erfindung, die in den Elementen 1 bis 4 mit der Fig. 1 übereinstimmt, wobei gleiche Elemente dann auch das gleiche Bezugszeichen tragen. In Fig. 2 erfolgt die Brechungsindexanpassung dadurch, daß das Blendenelement 7 und das Deckglas 5 der Fig. 1 zu einer einzigen Platte 9 integriert werden, indem z. B. Lamellen im Material dieser Platte 9 ausgebildet sind. Da durch diesen integrierten Aufbau auch kein Spalt zwischen Deckglas 5 und Blendenelement 7 mehr auftreten kann, erfolgt hier eine vollständige Brechungsindexanpassung, so daß an dieser Stelle weitere Maßnahmen nicht notwendig sind und störende Schattenbilder wegen des nunmehr verschwindend kleinen Abstandes zwischen der Flüssigkeitsschicht 3 und dem in der Platte 9 integrierten Blendenelement nicht auftreten.

**Anspruch**

Anzeigeanordnung, bestehend aus einer Flüssigkeitszelle, bei der die Lichtstreuung einer zwischen durchsichtigen Elektroden Liegenden Flüssigkeitsschicht durch Anlegen einer Spannung schaltbar ist, bei der hinter der rückseitigen Deckplatte der Flüssigkeitszelle eine Lichtquelle und zwischen Lichtquelle und Flüssigkeitszelle ein Blendenelement vorgesehen ist, welches in Beobachtungsrichtung den direkten Lichtdurchtritt zum die Flüssigkeitszelle von der Vorderseite betrachtenden Beobachter verhindert, dadurch gekennzeichnet, daß das Blendenelement und die der Lichtquelle (8) zugewande rückseitige Deckplatte der Flüssigkeitszelle (10) zu einer einzigen Platte als Rückwand

(9) integriert sind.

**Claim**

Indicating arrangement consisting of a liquid cell in which the light diffusion of a liquid layer lying between transparent electrodes is switchable by the application of a voltage and in which a light source is provided behind the rear cover plate of the liquid cell and a masking element is provided between the light source and the liquid coll, which masking element, in the direction of observation, prevents the direct passage of light to the observer viewing the liquid cell from the front, characterised in this, that the masking element and the rear cover plate, turned towards the light source (8), of the liquid cell (10) are integrated into a single plate as the rear wall (9).

**Revendication**

Agencement d'affichage comportant une cellule à liquide dans laquelle une couche de liquide située entre des électrodes transparentes peut avoir, sur la lumière, un effet dispersant commandé par l'application d'une tension, cet agencement comportant, derrière la face de recouvrement de l'arrière de la cellule à liquide, une source de lumière et, entre cette source de lumière et la cellule à liquide, un élément masquant empêchant la lumière d'atteindre directement, dans la direction d'observation, un observateur regardant la cellule, par la face avant de celle-ci, cet agencement étant caractérisé en ce que l'élément masquant et la plaque de recouvrement arrière de la cellule (10), cette plaque de recouvrement arrière étant tournée vers la source de lumière (8), sont intégrés en une seule plaque constituant une paroi arrière (9).

Fig.1

Fig.2